# EUROPEAN PATENT APPLICATION

(11) **EP 3 871 749 A1**
(43) Date of publication of application: **01.09.2021**
(21) Application number: 20169554.1
(22) Date of filing: 15.04.2020
(51) Int. Cl.: B01D 46/00, B01D 46/24

(54) **AIR FILTRATION RETENTION SYSTEM**

(30) Priority: 25.02.2020 US 202016799995
(71) Applicant: Tri-Mer Corporation, Owosso, MI 48867 (US)
(72) Inventor: WORTHINGTON, Chris, Owosso, MI Michigan 48867 (US); RUESS, Bret, Owosso, MI Michigan 48867 (US); COLE, Larry, Owosso, MI Michigan 48867 (US)
(74) Representative: Maiwald Patent- und Rechtsanwaltsgesellschaft mbH

(57) **Abstract**

A filter device (8) includes a filter element (26) having a body portion (30) surrounding a hollow interior cavity (34) with an inner surface (29). A sleeve assembly (50) having a body portion (56) is at least partially received within the hollow interior cavity (34) of the filter element (26). At least one retaining mechanism (70) is received within the hollow interior cavity (34) of the filter element (26). The retaining mechanism (70) includes a mounting portion (72) operably coupled to an outer surface (56D) of the body portion (56) of the sleeve assembly (50). The retaining mechanism (70) further includes an upwardly extending tab (74) having a distal end (75) that is engaged with the inner surface (29) of the hollow interior cavity (34) of the filter element (26) to retain the sleeve assembly (50) within the hollow interior cavity (34) of the filter element (26).

## Description

### BACKGROUND OF THE DISCLOSURE

The present disclosure generally relates to filtration system, and more specifically, to a retention system for a sleeve assembly as received within a filter element.

### SUMMARY OF THE DISCLOSURE

According to one aspect of the present disclosure, a filter device includes a filter element having a body portion surrounding a hollow interior cavity with an inner surface. A sleeve assembly having a body portion is at least partially received within the hollow interior cavity of the filter element. At least one retaining mechanism is received within the hollow interior cavity of the filter element. The retaining mechanism includes a mounting portion operably coupled to an outer surface of the body portion of the sleeve assembly. The retaining mechanism further includes an upwardly extending tab having a distal end that is engaged with the inner surface of the hollow interior cavity of the filter element to retain the sleeve assembly within the hollow interior cavity of the filter element.

According to another aspect of the present disclosure, a sleeve assembly includes a body portion surrounding a hollow interior portion. The body portion includes an outer surface. At least one retaining mechanism includes a mounting portion that is operably coupled to the outer surface of the body portion of the sleeve assembly. The at least one retaining mechanism further includes an upwardly extending tab having a distal end that is flexibly resilient and operable between first and second positions. The upwardly extending tab is spaced-apart from the outer surface of the body portion of the sleeve assembly a first distance when the upwardly extending tab is in the first position. The upwardly extending tab is spaced-apart from the outer surface of the body portion a second distance that is less than the first distance when the upwardly extending tab is in the second position.

According to yet another aspect of the present disclosure, a sleeve assembly includes a body portion having a hollow interior portion and an outer surface. At least one retaining mechanism includes a mounting portion and an upwardly extending tab with a living hinge disposed therebetween. The mounting portion of the at least one retaining mechanism is mounted to the outer surface of the body portion. The upwardly extending tab flexes at the living hinge between first and second positions relative to the mounting portion and includes a distal end that is spaced-apart from the outer surface of the body portion a first distance when the upwardly extending tab is in the first position. The distal end of the upwardly extending tab is spaced-apart from the outer surface of the body portion a second distance that is less than the first distance when the upwardly extending tab is in the second position.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a top perspective view of a building shown in phantom and having an industrial filtration system;
FIG. 2 is a fragmentary top perspective view of a filter device having components thereof exploded away therefrom;
FIG. 3A is a side elevation view of a sleeve assembly;
FIG. 3B is a zoomed in view of the sleeve assembly of FIG. 3A taken at location III;
FIG. 4 is a cross-sectional view of adjacent sleeve assemblies received in adjacent filter elements of the filter device of FIG. 2, taken at line IV;
FIG. 5 is a top perspective view of the sleeve assembly of FIG. 3A;
FIG. 6 is a bottom perspective view of the sleeve assembly of FIG. 3A; and
FIG. 7 is a bottom plan view of the sleeve assembly of FIG. 3A.

The components in the figures are not necessarily to scale, emphasis instead being placed upon illustrating the principles described herein.

### DETAILED DESCRIPTION

The present illustrated embodiments reside primarily in combinations of method steps and apparatus components related to a retention system for a sleeve assembly as received within a filter element. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

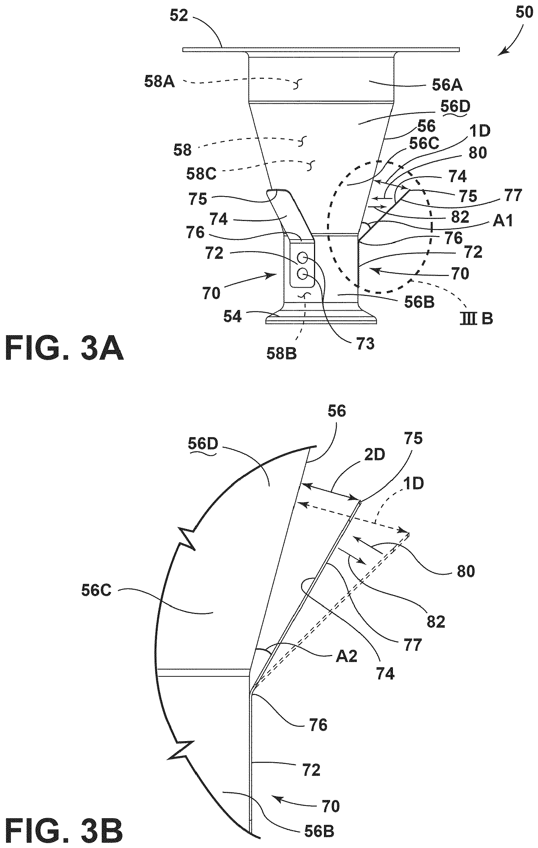

For purposes of description herein, the terms "upper," "lower," "right," "left," "rear," "front," "vertical," "horizontal," and derivatives thereof shall relate to the disclosure as oriented in FIG. 3A. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a ..." does not, without more constraints, preclude the existence of additional identical elements in the process, method, article, or apparatus that comprises the element.

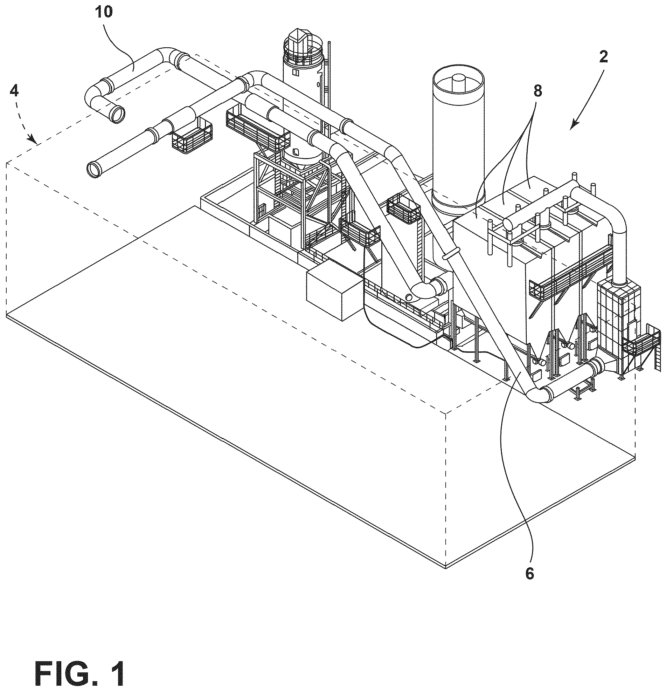

The present concept generally relates to components of an industrial filtration and dust collection system, as shown in FIG. 1. The filtration system 2 of the present concept may be positioned outside of a manufacturing facility or building 4, shown in phantom in FIG. 1, and may include an intake system 6, a number of filter devices 8, and an output system 10. The filtration system 2 of the present concept may also be positioned within the building 4 without departing from the spirit of the present concept. Both the intake system 6 and the output system 10 are in fluid communication with the building 4 with the filter devices 8 disposed therebetween to filter air passing through the filtration system 2 through the intake and output systems 6, 10.

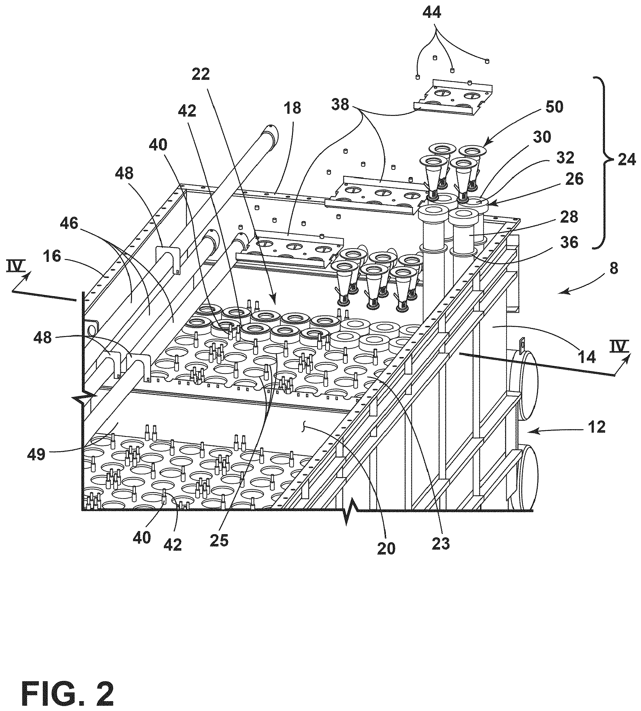

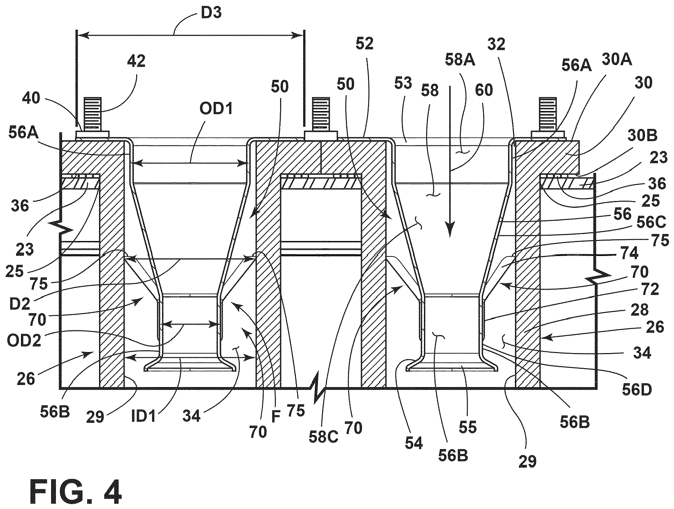

Referring now to FIG. 2, a filter device 8 is shown having a housing 12 that is comprised of sidewalls 14, 16 and 18. The sidewalls 14, 16 and 18 cooperate with one another, and likely with a fourth sidewall, to define an interior chamber 20. Within the chamber 20 of the housing 12, a plurality of filter assemblies 22 are disposed. As shown in FIG. 2, the plurality of filter assemblies 22 are supported on a rack assembly 23 having a plurality of apertures 25 disposed therethrough. A filter assembly 24 is shown as an example of a filter assembly of the plurality of filter assemblies retained within the filter device 8. As shown, the filter assembly 24 includes a filter element 26, which may be a ceramic filter element, having a body portion 28 with an upper collar portion 30 surrounding an open upper aperture 32. The open upper aperture 32 opens into a hollow interior cavity 34 (FIG. 4) that is configured to receive a sleeve assembly 50, as further described below. A ring gasket 36 is disposed around the body portion 28 and is received between the upper collar portion 30 and the rack assembly 23 in assembly. As further shown in FIG. 2, a number of filter clamp plates 38 are mounted on stud bushings 40 provided on plate fasteners 42 to hold the sleeve assemblies 50 and the filter elements 26 in-place. Specifically, the plate fasteners 42 are coupled to and upwardly extend from the rack assembly 23 and are contemplated to be threaded fasters that are used to secure the filter clamp plates 38 thereto using threaded nuts 44. While the filter element 26 may include a ceramic material, it is contemplated that other materials can be used for the filter element of the present concept.

As further shown in FIG. 2, a number of blow tubes 46 are held in-place by mounting brackets 48 and are configured to deliver clean compressed air to the filter device 8. In this way, the blow tubes 46 are configured to clean out the filter assemblies 24 of the filter device 8 to ensure proper performance of the same. The mounting brackets 48 are shown mounted to partitions 49 provided within the interior chamber 20.

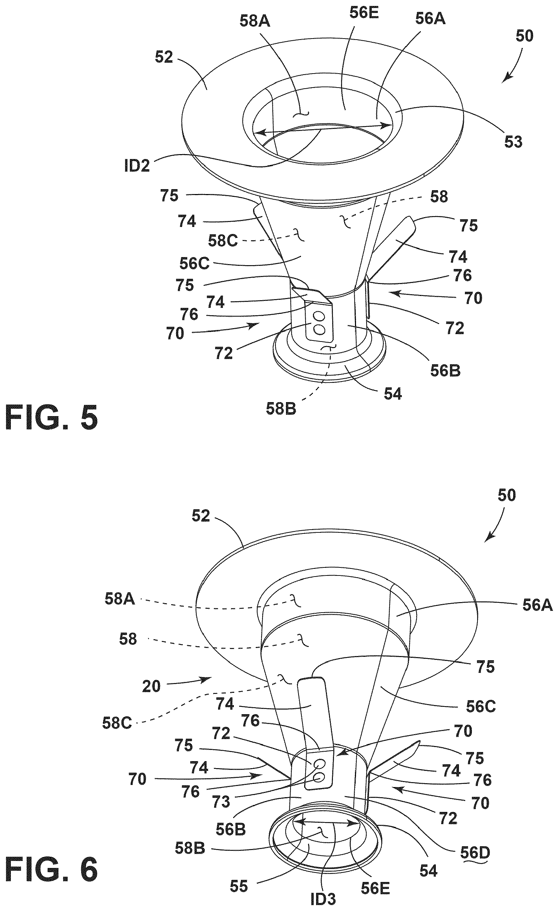

Referring now to FIGS. 3A, 3B and 4, a sleeve assembly 50 is shown as an exemplary sleeve assembly used within the filter device 8 of FIG. 2. The sleeve assembly 50 shown in FIG. 3A includes an upper flange 52 and a lower flange 54 with a body portion 56 disposed therebetween. The upper flange 52 surrounds and outwardly extends from an upper opening 53, as best shown in FIG. 5, while the lower flange 54 surrounds and outwardly extends from a lower opening 55, (FIG. 4). In this way, the body portion 56 of the sleeve assembly 50 is disposed between the upper and lower openings 53, 55. Both the upper opening 53 and the lower opening 55 open into a hollow interior portion 58 that is generally defined by the body portion 56 of the sleeve assembly 50 at opposed sides of the sleeve assembly 50. Specifically, the hollow interior portion 58 includes an upper portion 58A and a lower portion 58B with a transition area 58C disposed therebetween. As shown in FIG. 4, the upper portion 58A is larger than the lower portion 58B, such that the transition area 58C therebetween tapers inwardly from the upper portion 58A to the lower portion 58B. This tapering configuration of the hollow interior portion 58 from the upper portion 58A to the lower portion 58B gives the sleeve assembly 50 an intended venturi effect by channeling air from the upper portion 58A of the hollow interior portion 58 to the lower portion 58B along the airflow path indicated by arrow 60. As further shown in FIGS. 3A and 4, the body portion 56 of the sleeve assembly 50 also includes an upper portion 56A that is larger than a lower portion 56B. Thus, a transition portion 56C disposed between the upper portion 56A and the lower portion 56B tapers inwardly from the upper portion 56A to the lower portion 56B. In the restriction provided by the configuration of the hollow interior portion 58 of the body portion 56 of the sleeve assembly 50, air moving along the airflow path 60 will have an increased velocity, a reduced pressure and will produce a partial vacuum as it passes through the sleeve assembly 50. While the sleeve assembly 50 shown in FIGS. 3A, 3B and 4 includes a body portion 56 and a hollow interior portion 58 that provide the venturi affect in the tapering configuration of each feature, it is contemplated that the body portion 56 and the hollow interior portion 58 of the sleeve assembly 50 may include many other shapes not specifically shown in the figures. For instance, the body portion 56 and the hollow interior portion 58 could have consistent cross-sectional configurations, such as provided in a cylinder configuration. Further, the body portion 56 could have a consistent cross-sectional configuration while the hollow interior portion 58 could include the tapering configuration shown in FIGS. 3A, 3B and 4, or vice versa. As such, the sleeve configuration shown having a venturi inducing configuration is not meant to limit the scope of the invention.

With specific reference to FIG. 3A, the body portion 56 of the sleeve assembly 50 includes an outer surface 56D which is provided as an annular outer surface in FIG. 3A. In the embodiment shown in FIG. 3A, the sleeve assembly 50 includes multiple retaining mechanisms 70. Each retaining mechanism 70 includes a mounting portion 72 that is mounted on the outer surface 56D of the body portion 56 of the sleeve assembly 50. In the embodiment shown in FIG. 3A, the mounting portion 72 of each retaining mechanism 70 is coupled to the outer surface 56D of the body portion 56 of the sleeve assembly 50 at the lower portion 56B thereof. Apertures 73 are disposed through the mounting portions 72 and may be used as welding locations to affix the mounting portions 72 to the outer surface 56D of the body portion 56 of the sleeve assembly 50. As such, it is contemplated that the retaining mechanisms 70 are comprised of metal straps that can be welded to a metal sleeve assembly 50. Other means of operably coupling the retaining mechanisms 70 to the sleeve assembly 50 are also contemplated without departing from the spirit of the present concept, such as fasteners, adhesives, and integrated body portions that are molded or printed as an integrated structure.

As further shown in FIG. 3A, each retaining mechanism 70 further includes an upwardly extending tab 74 having a distal end 75. Specifically, the upwardly extending tab 74 upwardly extends from the mounting portion 72 and is contemplated to be flexibly resilient with respect to the mounting portion 72. In this way, the upwardly extending tabs 74 are operable between first and second positions. Similarly, the upwardly extending tabs 74 are operable between loaded and at-rest conditions. With specific reference to the retaining mechanism 70 shown on the right-hand side of the sleeve assembly 50 in FIG. 3A, the upwardly extending tab 74 thereof is configured to flex inwardly from a first position or at-rest condition, to a second position or loaded condition in a direction as indicated by arrow 80. In the first position shown in FIG. 3A, the upwardly extending tab 74 is considered to be in an at-rest condition, such that the upwardly extending tab 74, and the distal end 75 thereof, disposed at a first angle A1 relative to the outer surface 56D of the body portion 56, and is spaced-apart from the outer surface 56D of the body portion 56 of the sleeve assembly 50 a first distance 1D. From the at-rest condition, the upwardly extending tab 74 can move from the first position to the second position (shown in FIG. 3B) in an inward direction as indicated by arrow 80. In the second position shown in FIG. 3B, the upwardly extending tab 74 is considered to be in a loaded condition, such that the upwardly extending tab 74, and the distal end 75 thereof, is disposed at a second angle A2 relative to the outer surface 56D of the body portion 56 that is less than the first angle A1 described above with reference to FIG. 3A. Further, the upwardly extending tab 74, and the distal end 75 thereof, is spaced-apart from the outer surface 56D of the body portion 56 of the sleeve assembly 50 a second distance 2D when the upwardly extending tab 74 is in the second position. The second distance 2D shown in FIG. 3B is less than the first distance 1D by which the upwardly extending tab 74 is spaced-apart from the outer surface 56D of the body portion 56 of the sleeve assembly 50 in the first position. As noted above, the upwardly extending tabs 74 of the retaining mechanisms 70 are contemplated to be flexibly resilient, such that the upwardly extending tabs 74 of the retaining mechanisms 70 are contemplated to resiliently reassume the configuration shown when the upwardly extending tabs 74 are in the first position (or the at-rest condition) from the second position (or loaded condition) in the direction as indicated by arrow 82. Thus, the upwardly extending tabs 74 of the retaining mechanisms 70 are configured to move from the loaded condition towards the at-rest condition, as biased thereto, when a force or engagement surface is removed from the upwardly extending tabs 74. The upwardly extending tabs 74 may flex at the living hinge 76, or along any portion of the retaining mechanisms 70. It is contemplated that the living hinge 76 may include a portion of thinned material relative to the mounting portion 72 or the upwardly extending tab 74 to encourage flexion at the living hinge 76. As used herein, the term "distal end" is used to describe a feature that is outwardly disposed and configured to engage the inner surface 29 of the filter element 26. In this case, the distal end 75 of the upwardly extending tabs 74 is the uppermost and outermost portion of the upwardly extending tabs 74, but could be positioned as a projection on the outer surface 77 of the upwardly extending tabs 74 for engagement with the inner surface 29 of the hollow interior cavity 34 of the filter element 26, without departing from the spirit of the present concept.

Referring now to FIG. 4, adjacent sleeve assemblies 50 are shown disposed in adjacent filter elements 26, respectively. The filter elements 26 contemplated for use with the present concept are contemplated to be ceramic filter elements. With specific reference to the filter element 26 shown on the right-hand side in FIG. 4, the filter element 26 includes a body portion 28 surrounding a hollow interior cavity 34 having an inner surface 29. The inner surface 29 of the body portion 28 of the filter element 26 is contemplated to be an annular inner surface defining an inner diameter ID1 of the hollow interior cavity 34, as shown in the filter element 26 illustrated on the left-hand side in FIG. 4. Referring again to the filter element 26 on the right-hand side in FIG. 4, the upper collar portion 30 is disposed above the body portion 28 and includes upper and lower surfaces 30A, 30B. As noted above, the upper collar portion 30 surrounds the open upper aperture 32 through which at least a portion of the body portion 56 of the sleeve assembly 50 is received into the hollow interior cavity 34. As received on the rack assembly 23 through an aperture 25 thereof, the upper collar portion 30 of the filter element 26 generally abuts the rack assembly 23 at the lower surface 30B of the upper collar portion 30. In the embodiment shown in FIG. 4, the ring gasket 36 is positioned between the lower surface 30B of the upper collar portion 30 of the filter element 26 and the rack assembly 23. With the body portion 56 of the sleeve assembly 50 received in the hollow interior cavity 34 of the filter element 26, the upper flange 52 abuts the upper surface of the 30A of the upper collar portion 30 of the filter element 26.

With specific reference to the filter element 26 shown on the left-hand side in FIG. 4, and as noted above, the outer surface 56D of the body portion 56 of the sleeve assembly 50 is an annular outer surface, wherein the upper portion 56A of the body portion 56 of the sleeve assembly 50 includes an outer diameter OD1 that is greater than an outer diameter OD2 of the lower portion 56B of the body portion 56 of the sleeve assembly 50. The outer diameters OD1, OD2 of the respective upper and lower portions 56A, 56B of the body portion 56 of the sleeve assembly 50 are both less than the inner diameter ID1 defined by the annular inner surface 29 of the filter element 26 at the hollow interior cavity 34 thereof. In this way, the outer surface 56D of the sleeve assembly 50 defines an outer diameter of the sleeve assembly 50, at any location along the body portion 56 of the sleeve assembly 50, that is less than the inner diameter ID1 of the filter element 26. Thus, the body portion 56 of the sleeve assembly 50 can be received within the hollow interior cavity 34 of the filter element 26. As further shown in FIG. 4, the upper flange 52 of the sleeve assembly 50 includes a diameter D3 that is larger than the inner diameter ID1 of the hollow interior cavity 34 of the filter element 26. In this way, the upper flange 52 abuts the upper collar portion 30 of the filter element 26, and is not received within the hollow interior cavity 34 of the filter element 26.

As further shown in the embodiment of FIG. 4, with the body portion 56 of the sleeve assembly 50 received within the hollow interior cavity 34 of the filter element 26, the retaining mechanisms 70 are also received within the hollow interior cavity 34 of the filter element 26. With the retaining mechanisms 70 having the flexibly resilient upwardly extending tabs 74, it is contemplated that the outer surfaces 77 (FIG. 3B) of the upwardly extending tabs 74 engage the open upper aperture 32 of the filter element 26 and move towards the loaded position from the at-rest position under a downward force applied to the sleeve assembly 50 as the sleeve assembly 50 is inserted into the hollow interior cavity 34 of the filter element 26. With the body portion 56 of the sleeve assembly 50 received within the hollow interior cavity 34 of the filter element 26, the upwardly extending tabs 74 of the retaining mechanisms 70 are engaged with the inner surface 29 of the hollow interior cavity 34 of the filter element 26 at the distal ends 75 thereof. Further, the distal end 75 of the upwardly extending tabs 74 of the sleeve assembly 50 not only engage the inner surface 29 of the hollow interior cavity 34 of the filter element 26, but impart an outwardly directed force F to the inner surface 29 of the hollow interior cavity 34 of the filter element 26 given the outwardly biased disposition of the upwardly extending tabs 74 in the direction as indicated by arrow 82 (FIGS. 3A and 3B). Thus, in the position shown in FIG. 4, the upwardly extending tabs 74 of the retaining mechanisms 70 are in the loaded condition or second position as received within the hollow interior cavity 34 of the filter element 26. With the force imparted by the upwardly extending tabs 74, the distal ends 75 thereof are in a high friction engagement with the inner surface 29 of the hollow interior cavity 34 of the filter element 26. In this way, the retaining mechanisms 70 retain the sleeve assemblies 50 within their respective filter elements 26 once inserted into the hollow interior cavities 34 thereof.

As further shown in the embodiment of FIG. 4, the mounting portions 72 of the retaining mechanisms 70 are mounted to the lower portion 56B of the body portion 56 of the sleeve assembly 50 at the outer surface 56D thereof. In this way, the retaining mechanisms 70 are mounted to the body portion 56 of the sleeve assembly 50 at the outer diameter OD2 of the lower portion 56B of the body portion 56 that is less than the outer diameter OD1 of the upper portion 56A of the body portion 56 of the sleeve assembly 50. While the retaining mechanisms 70 are mounted to a recessed portion, the lower portion 56B, of the body portion 56 of the sleeve assembly 50, the upwardly extending tabs 74 thereof outwardly extend to a diameter D2 that is greater than the outer diameter OD1 of the upper portion 56A of the body portion 56 of the sleeve assembly 50. It is contemplated that the diameter D2 defined between the distal ends 75 of the upwardly extending tabs 74 is equal to the inner diameter ID1 of the hollow interior cavity 34 of the filter element 26, as the distal ends 75 of the upwardly extending tabs 74 are engaged with the inner surface 29 of the hollow interior cavity 34 when the body portion of the sleeve assembly 50 is received within the hollow interior cavity 34 of the filter element 26.

The first and second angles A1 and A2, shown respectively in FIGS. 3A and 3B position the upwardly extending tabs 74 of the retaining mechanisms 70 in an upward and outward manner, such that insertion of the sleeve assembly 50 into the hollow interior cavity 34 of the filter element 26 is easily provided by overcoming the spring force F of the upwardly extending tabs 74 of the retaining mechanisms 70 when inserting the body portion 56 of the sleeve assembly 50 into the filter element 26. However, reverse movement of the sleeve assembly 50 in an upward direction relative to the hollow interior cavity 34 of the filter element 26 is difficult due to a high friction engagement between the distal ends 75 of the upwardly extending tabs 74 and the inner surface 29 of the hollow interior cavity 34. In this way, removal of the sleeve assemblies 50 from the filter element 26 is contemplated to be a deliberate measure, and the retaining mechanisms 70 are configured to hold the sleeve assemblies 50 in-place within the filter elements 26, even when either structure is damaged. This reduces down time as a filter device 8 (FIG. 2) can still operate with a damaged sleeve assembly 50 or filter element 26, so long as these parts are not freely moving about the chamber 20 of the filter device 8.

Referring now to FIGS. 5 and 6, the body portion 56 of the sleeve assembly 50 includes an inner surface 56E that defines an inner diameter of the hollow interior portion 58 of the sleeve assembly 50. As specifically shown in FIG. 5, the upper portion 58A of the hollow interior portion 58 includes an inner diameter ID2 at the upper opening 53 thereof as defined by the inner surface 56E of the body portion 56. As specifically shown in FIG. 6, the lower portion 58B of the hollow interior portion 58 includes an inner diameter ID3 at the lower opening 55 thereof as defined by the inner surface 56E of the body portion 56.

With further reference to FIGS. 5 and 6, the sleeve assembly 50 illustrated therein includes first, second and third retaining mechanisms 70 that are spaced-apart from one another on the outer surface 56D of the body portion 56 of the sleeve assembly 50. Having three retaining mechanisms 70, the sleeve assembly 50 will be centered within the hollow interior cavity 34 of the filter element 26 as shown in FIG. 4. This is due to a triangulation of equal forces F (FIG. 4) acting on the inner surface 29 of the hollow interior cavity 34 of the filter element 26. In this way, the three retaining mechanisms 70 cooperate to define a centering feature for the sleeve assembly 50 as received within the filter element 26.

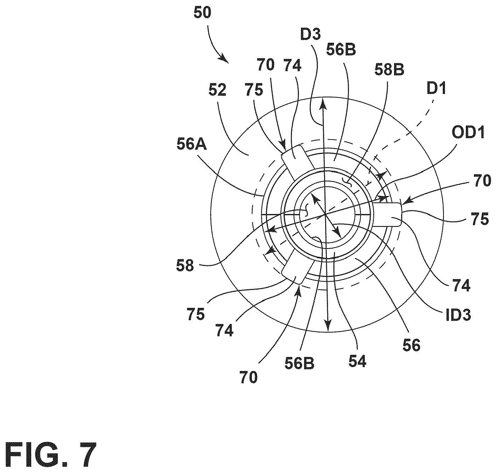

Referring now to FIG. 7, the sleeve assembly 50 is shown from a bottom plan view wherein the distal ends 75 of the first, second and third retaining mechanisms 70 are shown as defining a diameter D1 therebetween. The upwardly extending tabs 74 of the first, second and third retaining mechanisms 70 are contemplated to be in the first position, or the at rest condition, such that the diameter D1 defined between the distal ends 75 thereof may be described herein as a first diameter D1 relating to the upwardly extending tabs 74 being disposed in the first position. As noted above, the distal ends 75 of the first, second and third retaining mechanisms 70 define a diameter D2 (FIG. 4) therebetween when the upwardly extending tabs 74 of the first, second and third retaining mechanisms 70 are in the second position, or loaded condition. In this way, the diameter D2 defined by the upwardly extending tabs 74 being disposed in the second position, may be referred to herein as a second diameter D2. As the upwardly extending tabs 74 move inward in the direction as indicated by arrow 80 (FIG. 3A and 3B) from the first position to the second position, the second diameter D2 (FIG. 4) defined by the distal ends 75 of the upwardly extending tabs 74 is less than the first diameter D1 (FIG. 7).

As further shown in FIG. 7, the first diameter D1 defined by the distal ends 75 is not only greater than the second diameter D2 (also defined by the distal ends 75), but is also greater than the outer diameter OD1 of the upper portion 56A of the body portion 56 of the sleeve assembly 50. Thus, the first diameter D1 is greater than an outer diameter of the body portion 56 of the sleeve assembly 50 along any portion of the body portion of the sleeve assembly 50. The diameter D3 of the upper flange 52 is contemplated to be greater than the first diameter D1 of the distal ends 75 of the retaining mechanisms 70, as shown in FIG. 7. Further, the diameter D1 defined by the distal ends 75 of the three retaining mechanisms 70 when the upwardly extending tabs 74 of the three retaining mechanisms 70 are in the at-rest condition is greater than the inner diameter ID1 (FIG. 4) of the hollow interior cavity 34 of the filter element 26. In the embodiment shown in FIGS. 5-7, the retaining mechanisms 70 are evenly spaced-apart along the outer surface 56D of the body portion 56 of the sleeve assembly 50, but may be spaced-apart in other intervals that do not provide for even spacing of the retaining mechanisms 70.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A filter device (8), comprising:
a filter element (26) having a body portion (28) surrounding a hollow interior cavity (34) with an inner surface (29);
a sleeve assembly (50) having a body portion (56) at least partially received within the hollow interior cavity (34) of the filter element (26); and
at least one retaining mechanism (70) received within the hollow interior cavity (34) of the filter element (26), wherein the at least one retaining mechanism (70) includes a mounting portion (72) operably coupled to an outer surface (56D) of the body portion (56) of the sleeve assembly (50), and further wherein the at least one retaining mechanism (70) further includes an upwardly extending tab (74) having a distal end (75), wherein the distal end (75) of the upwardly extending tab (74) is engaged with the inner surface (29) of the hollow interior cavity (34) of the filter element (26).

2. The filter device (8) of claim 1, wherein the upwardly extending tab (74) of the at least one retaining mechanism (70) is flexibly resilient and operable between loaded and at-rest conditions.

3. The filter device (8) of claim 2, wherein the upwardly extending tab (74) is in the loaded condition as received within the hollow interior cavity (34) of the filter element (26).

4. The filter device (8) of any one of claims 1-3, wherein the distal end (75) of the upwardly extending tab (74) imparts a force on the inner surface (29) of the hollow interior cavity (34) of the filter element (26).

5. The filter device (8) of any one of claims 1-4, wherein the filter element (26) includes an upper collar portion (30) surrounding an open upper aperture (32) through which the body portion (56) of the sleeve assembly (50) is at least partially received.

6. The filter device (8) of any one of claims 1-5, wherein the sleeve assembly (50) includes an upper flange (52) surrounding and outwardly extending from an upper opening (53) of the sleeve assembly (50).

7. The filter device (8) of claim 6, wherein the upper flange (52) of the sleeve assembly (50) abuts an upper surface (30A) of the upper collar portion (30) of the filter element (26).

8. The filter device (8) of any one of claims 1-7, wherein the body portion (56) of the sleeve assembly (50) includes an upper portion (56A) and a lower portion (56B) with a transition portion (56C) disposed therebetween.

9. The filter device (8) of claim 8, wherein the transition portion (56C) of the body portion (56) of the sleeve assembly (50) tapers inwardly from the upper portion (56A) of the body portion (56) to the lower portion (56B) of the body portion (56).

10. The filter device (8) of any one of claims 8 and 9, wherein the lower portion (56B) of the body portion (56) of the sleeve assembly (50) includes an outer diameter (OD2) that is less than an outer diameter (OD1) of the upper portion (56A) of the body portion (56) of the sleeve assembly (50).

11. The filter device (8) of any one of claims 1-10, wherein the inner surface (29) of filter element (26) is an annular inner surface (29) defining an inner diameter (ID1) of the filter element (26).

12. The filter device (8) of any one of claims 1-11, wherein the at least one retaining mechanism (70) includes at least three retaining mechanisms (70) spaced-apart from one another on the outer surface (56D) of the body portion (56) of the sleeve assembly (50).

13. The filter device (8) of claim 12, wherein the upwardly extending tabs (74) of the at least three retaining mechanisms (70) are flexibly resilient and operable between loaded and at-rest conditions.

14. The filter device (8) of claim 13, wherein the distal ends (75) of the at least three retaining mechanisms (70) define a diameter (D2) therebetween that is greater than the inner diameter (ID1) of the filter element (26) when the upwardly extending tabs (74) of the at least three retaining mechanisms (70) are in the at-rest condition.

15. The filter device (8) of claim 14, wherein diameter (D2) defined between the the distal ends (75) of the at least three retaining mechanisms (70) is the same as the inner diameter (ID1) of the filter element (26) when the upwardly extending tabs (74) of the at least three retaining mechanisms (70) are in the loaded condition.
